(19) Europäisches Patentamt / European Patent Office / Office européen des brevets

(11) EP 2 671 857 B1

(12) EUROPEAN PATENT SPECIFICATION

(45) Date of publication and mention of the grant of the patent:
13.10.2021 Bulletin 2021/41

(21) Application number: 12742215.2

(22) Date of filing: 30.01.2012

(51) Int Cl.:
C04B 41/50 (2006.01)          C04B 35/63 (2006.01)
C04B 41/85 (2006.01)          B01D 53/94 (2006.01)
B01J 23/04 (2006.01)          F01N 3/28 (2006.01)
F01N 3/027 (2006.01)          C04B 38/00 (2006.01)
C04B 35/565 (2006.01)         C04B 35/19 (2006.01)
B01J 35/04 (2006.01)          B01D 53/86 (2006.01)

(86) International application number:
PCT/JP2012/051940

(87) International publication number:
WO 2012/105478 (09.08.2012 Gazette 2012/32)

(54) **HONEYCOMB STRUCTURE IN SILICON CARBIDE MATERIAL, AND ELECTRIC-HEATING TYPE CATALYST CARRIER**

WABENSTRUKTUR AUS SILICIUMCARBIDMATERIAL, UND KATALYSATORTRÄGER FÜR ELEKTRISCHE ERHITZUNG

STRUCTURE EN NID D'ABEILLES EN MATÉRIAU CARBURE DE SILICIUM, ET SUPPORT DE CATALYSEUR DE TYPE À CHAUFFAGE ÉLECTRIQUE

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 04.02.2011 JP 2011022498

(43) Date of publication of application:
11.12.2013 Bulletin 2013/50

(73) Proprietor: NGK Insulators, Ltd.
Nagoya-city, Aichi 467-8530 (JP)

(72) Inventors:
• YABUKI, Miyuki
Nagoya-city
Aichi 467-8530 (JP)
• TOMITA, Takahiro
Nagoya-city
Aichi 467-8530 (JP)
• KOBAYASHI, Yoshimasa
Nagoya-city
Aichi 467-8530 (JP)

(74) Representative: Mewburn Ellis LLP
Aurora Building
Counterslip
Bristol BS1 6BX (GB)

(56) References cited:
JP-A- 2 221 621          JP-A- 3 023 307
JP-A- 2004 190 565       JP-A- 2004 275 854
JP-A- 2004 275 854       JP-A- 2004 292 197
US-A- 4 595 662          US-A1- 2003 053 940
US-A1- 2008 248 238      US-A1- 2009 038 797

• DATABASE WPI Week 198620 1986 Thomson Scientific, London, GB; AN 1986-129418 XP002743299, & JP S61 68380 A (IBIDEN CO LTD) 8 April 1986 (1986-04-08)
• None

EP 2 671 857 B1

**Description**

Technical Field

The present invention relates to a honeycomb structure, and an electric heating type catalyst carrier.

Background Art

Exhaust gas emitted from a diesel engine contains particulate matter (PM), and therefore, after the PM is collected by a diesel particulate filter (DPF) installed in the exhaust path, the exhaust gas is discharged into the atmosphere. On the other hand, exhaust gas emitted from a gasoline engine contains hydrocarbon (HC), carbon monoxide (CO), and nitrogen oxide (NOx), and therefore, after these substances are converted into water, carbon dioxide, and nitrogen by means of oxidation-reduction reactions by a catalytic converter installed in the exhaust path, the exhaust gas is discharged into the atmosphere. As such a DPF or catalytic converter, a honeycomb filter including silicon carbide (SiC) as a main component may be used in some cases. For example, Patent Literature 1 discloses a honeycomb filter which contains silicon carbide particles and metallic silicon, in which a film covering the surface thereof has a phase including silicon oxide. Furthermore,

Patent Literature 2 discloses a honeycomb filter which contains silicon carbide particles and metallic silicon, in which a film covering the surface thereof has a mullite crystal phase. Furthermore, Patent Literature 3 discloses a silicon carbide heating element which has a film containing a potassium aluminosilicate.

Patent Literature 1: Japanese Unexamined Patent Application Publication No. 2002-154882
Patent Literature 2: WO2005/014171
Patent Literature 3: Japanese Unexamined Patent Application Publication No. 2-186586

JP 2004 275854 A describes a SiC based honeycomb or catalyst carrier comprising a SiC substrate coated with a lithium aluminosilicate film to improve the thermal shock resistance, but is silent about spodumene.

US 4 595 662 A describes cordierite honeycombs bonded or coated with a composition comprising 90% crystalline phase containing cordierite and spodumene.

Summary of Invention

However, when the materials disclosed in Patent Literatures 1 to 3 are used for the DPF or catalytic converter described above, problems may occur in terms of thermal shock resistance in some cases. That is, in the material of Patent Literature 1, since the thermal expansion coefficient of silicon oxide in the film is high, the thermal expansion coefficient of the material is also high, resulting in low thermal shock resistance, which is a problem. In the material of Patent Literature 2, since the thermal expansion coefficient of the mullite contained in the film is not so low, thermal shock resistance is not satisfactory. In the material of Patent Literature 3, since the thermal expansion coefficient of the potassium aluminosilicate is high, thermal shock resistance is low, which is a problem. Such problems are particularly marked in the case of catalytic converters of a type in which the catalyst is activated early by electric heating.

The present invention has been achieved in order to solve such problems. It is a main object of the present invention to provide a honeycomb structure formed of a silicon carbide material having excellent thermal shock resistance compared with the related art.

The present inventors have conducted a wide variety of studies on the material of a film which covers at least a portion of the surface of a substrate containing silicon carbide, and as a result, have found that lithium aluminosilicates typified by spodumene are excellent in terms of thermal shock resistance compared with cristobalite, mullite, quartz, and potassium aluminosilicates. Thereby, the present invention has been completed.

That is, a first aspect of the present invention relates to a honeycomb structure as set out in claim 1

A second aspect of the present invention relate to an electric heating type catalyst carrier as set out in claim 6.

The honeycomb structure according to the first aspect of the present invention has excellent thermal shock resistance compared with the related art. The reason for this is believed to be that, since the thermal expansion coefficient of the film is lower than the thermal expansion coefficient of the substrate, thermal expansion of the substrate can be suppressed by the film. The electric heating type catalyst carrier according to the second aspect of the present invention use the honeycomb structure according to the first aspect of the present invention, and therefore has excellent thermal shock resistance.

Brief Description of Drawings

[Fig. 1] Fig. 1 shows a SEM photograph (reflected electron image) of a substrate of Example 1.
[Fig. 2] Fig. 2 shows a SEM photograph (reflected electron image) of a sample of Example 1.

Description of Embodiments

A honeycomb structure formed of a silicon carbide material according to the first aspect of the present invention includes a substrate containing, as a main component, silicon carbide or containing, as main components, silicon carbide and metallic silicon, and a film covering at least a portion of the surface of the substrate. The film contains, as a main component, a phase including at least four elements: lithium (Li), aluminum (Al), silicon (Si), and oxygen (O).

The substrate is not particularly limited as long as it contains, as a main component, silicon carbide or contains, as main components, silicon carbide and metallic silicon. In particular, a substrate having a structure in which silicon carbide particles are bonded by metallic silicon is preferable. The substrate may contain, as a sintering aid, boron, carbon, or a metal oxide. In particular, the substrate preferably contains $B_4C$ or an oxide of an alkaline earth metal or rare-earth metal. When the honeycomb structure is used for a DPF, in order to prevent an increase in pressure loss while maintaining the strength of the substrate, the porosity is set preferably at 40% to 70%, and more preferably at 45% to 60%. When used for an electric heating type catalyst carrier, in order to facilitate supporting of a catalyst and electric heating, the porosity is set preferably at 20% to 50%, and more preferably 30% to 45%. The porosity can be adjusted by the amount of a pore-forming material, the Si/SiC ratio, the amount of a sintering aid, the firing atmosphere, and the like. In the case of the honeycomb shape, the thickness of the wall may be set at 50 to 500 $\mu$m, and the cell density may be set at 10 to 100 cells/cm$^2$. The term "substrate containing, as a main component, silicon carbide" refers to a substrate containing 50% by weight or more of silicon carbide, which may contain oxides, nitrides, and the like of silicon.

Preferably, the film does not substantially contain potassium. This is because there is a possibility that elemental potassium will corrode silicon carbide. The term "does not substantially contain" includes the case where the content is zero and also includes the case where a very small amount (for example, an amount below the detection limit) is contained as an impurity. The film contains a lithium aluminosilicate phase, specifically spodumene. (Other examples of lithium aluminosilicate include eucryptite, and quartz solid solutions.) Spodumene is used in the present invention because spodumene has the highest melting point among the lithium aluminosilicates and is a thermally stable crystal phase.

Preferably, the film has a maximum thickness of 2 to 102 $\mu$m. When the maximum thickness is in this range, satisfactory thermal shock resistance can be obtained. As the thickness increases, it is necessary to increase the concentration of a raw material to be applied. Consequently, the thickness is not likely to become uniform, application to the inside of pores is not likely to occur, and the drying time of the material applied increases, all of which are problems. Therefore, the maximum thickness is more preferably 2 to 50 $\mu$m, and still more preferably 2 to 20 $\mu$m. Furthermore, the film weight ratio is 4.1% to 58.3% by weight. When the film weight ratio is in this range, satisfactory thermal shock resistance can be obtained. As the film weight ratio decreases, it is possible to reduce the raw material cost by decreasing the coating weight of the raw material. Therefore, the film weight ratio is more preferably 4.1% to 50% by weight, and still more preferably 4.1% to 30% by weight. The film weight ratio is defined as a value obtained by dividing the difference between the weight of the silicon carbide sintered body after formation of the film and the weight of the silicon carbide sintered body before formation of the film by the weight of the former and expressed in percent. Furthermore, preferably, the film has a composition including 1% to 37% by weight of lithium oxide ($Li_2O$), 3% to 49% by weight of aluminum oxide ($Al_2O_3$), and 48% to 96% by weight of silicon oxide ($SiO_2$). When these ranges are satisfied, satisfactory thermal shock resistance can be obtained. Furthermore, in order to increase the amount of the lithium aluminosilicate so as to produce a more thermally stable substance, the film preferably has a composition including 20% to 37% by weight of $Li_2O$, 3% to 49% by weight of $Al_2O_3$, and 48% to 96% by weight of $SiO_2$, and more preferably has a composition including 20% to 37% by weight of $Li_2O$, 3% to 45% by weight of $Al_2O_3$, and 48% to 96% by weight of $SiO_2$.

A method for producing a honeycomb structure formed of a silicon carbide material according to the first aspect of the present invention, for example, includes a step (a) of applying alumina or an alumina precursor which is converted into alumina by heat treatment and lithium oxide or a lithium oxide precursor which is converted into lithium oxide by heat treatment to the surface of a substrate containing silicon carbide, and a step (b) of forming a film containing a lithium aluminosilicate on at least a portion of the surface of the substrate by performing heat treatment on the substrate obtained in the step (a) in an oxygen-containing atmosphere at 900°C to 1,300°C. In the step (a), silicon oxide or a silicon oxide precursor which is converted into silicon oxide by heat treatment may be further applied.

The substrate is the same as described above. Examples of the alumina precursor include, but are not limited to, alumina sol, basic aluminum chloride, basic aluminum lactate, aluminum chloride, aluminum nitrate, and aluminum sulfate. Among these, alumina sol and basic alumina lactate sol are preferable from the standpoints that the coating weight can be easily controlled, reactivity is high, and the lithium aluminosilicate is easily formed. Examples of the lithium oxide precursor include, but are not limited to, lithium oxide sol, lithium hydroxide, lithium acetate, lithium citrate, and lithium carbonate. Among these, lithium hydroxide is preferable from the standpoints that reactivity is high, and the lithium aluminosilicate is easily formed. Examples of the silicon oxide precursor include, but are not limited to, colloidal silica and ethyl silicate. Among these, colloidal silica is preferable from the standpoints that the coating weight can be easily controlled, reactivity is high, and the lithium aluminosilicate is easily formed. The thickness and film weight ratio of the film containing the lithium aluminosilicate can be changed arbitrarily, for example, by adjusting the amounts of use of lithium oxide or a precursor thereof, the aluminum oxide material or a precursor thereof, and silicon oxide or a precursor thereof.

In the step (a), in applying alumina or an alumina precursor to the surface of the substrate, it is preferable to use an aqueous solution or aqueous slurry containing alumina or the alumina precursor, and in applying lithium oxide or a lithium oxide precursor, it is preferable to use an aqueous solution or aqueous slurry containing lithium oxide or the lithium oxide precursor. Furthermore, in the step (a), in the case where silicon oxide or a silicon oxide precursor is further applied, it is preferable to use an aqueous solution or aqueous slurry containing silicon oxide or the silicon oxide precursor. In such a case, it is water vapor that is mainly generated in the step (b), and it is not necessary to use a device for eliminating toxic volatile components, thus enabling simplification of the production process.

In the step (a), in applying alumina or an alumina precursor, lithium oxide or a lithium oxide precursor, and silicon oxide or a silicon oxide precursor to the surface of the substrate, dipping, coating, spraying, or the like can be performed.

In the step (b), silica constituting the lithium aluminosilicate contained in the film may contain silica obtained by oxidation of the silicon component in the substrate by the heat treatment. In such a manner, in the case where silicon oxide is applied to the substrate, the amount of silicon oxide can be decreased. Alternatively, silica constituting the lithium aluminosilicate may be all supplied by silica obtained by oxidation of the silicon component in the substrate by the heat treatment. In such a manner, the step of applying silicon oxide to the substrate can be omitted.

In the step (b), the oxygen-containing atmosphere may contain water vapor. In this case, water vapor may be mixed from the outside into the atmosphere. Furthermore, the heat treatment is performed at 900°C to 1,300°C. In this range, the formation rate of the lithium aluminosilicate is high, and it is possible to obtain a silicon-containing material having excellent thermal shock resistance.

The honeycomb structure according to the first aspect of the invention can be used for a DPF or catalytic converter on which, for example, a noble metal catalyst is carried. That is, one utilization form of the honeycomb structure is a catalyst carrier. Furthermore, in catalytic converters of a type in which the catalyst is activated early by electric heating, high thermal shock resistance is required, and therefore use of the honeycomb formed of a silicon carbide material according to the first aspect of the present invention is particularly preferable.

EXAMPLES

[Example 1] A porous substrate composed of silicon carbide particles and metallic silicon with a porosity of 40% was prepared. The substrate was produced as follows. Silicon carbide (SiC) powder and metallic silicon (Si) powder as ceramic starting materials were mixed at a weight ratio of 80:20, and hydroxypropyl methylcellulose serving as a binder and water were added thereto to prepare a forming material. The forming material was kneaded, and a cylindrical puddle was formed by a vacuum pug mill. The binder content was 7% by mass relative to the total of the silicon carbide (SiC) powder and the metallic silicon (Si) powder. The water content was appropriately adjusted so that the puddle had a hardness suitable for extrusion, and was about 23% by mass relative to the total of the silicon carbide (SiC) powder and the metallic silicon (Si) powder. The average particle size of the silicon carbide powder was 33 $\mu$m, and the average particle size of the metallic silicon powder was 6 $\mu$m. The average particle sizes of silicon carbide, metallic silicon, and the pore-forming material are the values measured by laser diffractometry.

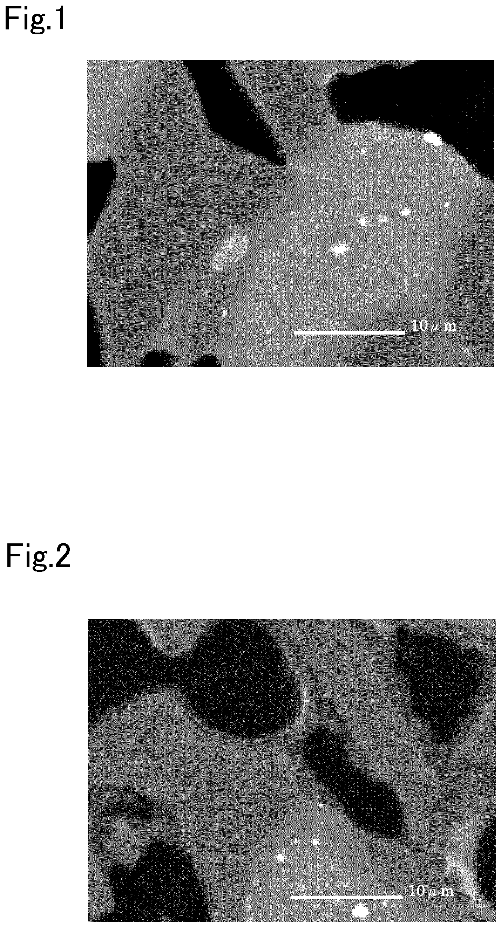

The resulting puddle was formed, using an extruder, into a honeycomb formed body. The resulting honeycomb formed body was dried by high-frequency dielectric heating, and then dried at 120°C for 2 hours using a hot air drying machine. The dried honeycomb formed body was degreased in the atmosphere at 550°C over 3 hours, and then fired in an Ar inert atmosphere at about 1,450°C for 2 hours. Thereby, a porous substrate in which SiC crystal grains were bonded by Si was obtained. Note that the porosity was measured by a mercury porosimeter. Fig. 1 shows a SEM photograph of this substrate.

The porous substrate was dipped in an acetic acid-stabilized alumina sol having an alumina particle size of 10 to 100 nm and a concentration of 10% by weight so that alumina was applied to the surface of the substrate, and drying was performed in the air at 110°C. Subsequently, the substrate was dipped in a 2wt% aqueous solution of lithium hydroxide so that lithium hydroxide was applied to the surface of the substrate, and drying was performed in the air at 110°C. Subsequently, the substrate was subjected to heat treatment in the air at 1,100°C for 3.5 hours. Thereby, a sample of Example 1 composed of a silicon-containing material including a substrate containing silicon carbide and metallic silicon and a film covering at least a portion of the surface of the substrate was obtained. The film of the sample contains a lithium aluminosilicate formed by reaction among lithium oxide, alumina, and silica, but does not substantially contain elemental potassium. The term "does not substantially contain" includes the case where the content is zero and also includes the case where a very small amount (for example, an amount below the detection limit) is contained as an impurity. It was confirmed by the peak appearing at $2\theta = 25.0°$ to $26.3°$ in X-ray diffraction (X-ray source Cu-K$\alpha$) that the film was composed of a lithium aluminosilicate. Among lithium aluminosilicates, in each of spodumene, eucryptite, and a quartz solid solution, a peak appears at this position. Furthermore, it was confirmed by the peak appearing at $2\theta = 22.0°$ to $23.0°$ in X-ray diffraction (X-ray source Cu-K$\alpha$) that a spodumene crystal phase was contained. While a peak appears at this position in spodumene, a peak does not appear at this position in eucryptite or a quartz solid solution.

The film weight ratio (wt%), the composition ratio (weight ratio) of the film, the maximum thickness ($\mu$m) of the film, the change in thermal expansion (%) of the sample, and the change in strength (%) of the sample were calculated for the sample of Example 1, and the results thereof are shown in Table 1. The parameters were measured.

• Film weight ratio (wt%)

The film weight ratio was calculated in accordance with the following formula:

```
Film weight ratio = (weight of sample - weight of
substrate)/weight of sample × 100
```

In the formula, the sample refers to a silicon carbide material in which a film is formed on a substrate, and the substrate refers to the silicon carbide material not having the film.

• Composition ratio (weight ratio) of film

Chemical analysis was performed on the sample and the substrate in accordance with JIS R 1616. By subtracting the quantitative value of the substrate from the quantitative value of the sample, the weights of three components ($Li_2O$, $Al_2O_3$, and $SiO_2$) were obtained. The composition ratio of the three components was calculated on the basis of the weights.

• Maximum thickness ($\mu$m) of film

The thickness of the film was measured using a SEM image (magnification 1,000) of a cross section of the sample. The maximum value among the measured values was defined as the maximum thickness. Fig. 2 shows a SEM image of the sample of Example 1. Dark grey portions correspond to silicon carbide particles, and light grey portions correspond to metallic silicon. In Fig. 2, it was confirmed that the maximum thickness of a lithium aluminosilicate film formed on the surfaces of the silicon carbide particles and the metallic silicon was 5 $\mu$m. The thickness was measured in a field of view of 95 × 120 $\mu$m (5 spots per field of view).

• Change in thermal expansion (%)

An average linear thermal expansion coefficient from room temperature to 800°C was measured in accordance with JIS R1618, and the resulting value was defined as the thermal expansion coefficient. The change in thermal expansion was calculated in accordance with the formula:

```
(value of sample - value of substrate)/value of substrate ×
100(%)
```

• Spodumene crystal phase

Powder X-ray diffraction (X-ray source Cu-K$\alpha$) was measured in accordance with JIS K0131, and substances were identified. It was confirmed by the peak appearing at $2\theta = 22.0°$ to $23.0°$ that a spodumene crystal phase was contained.

[Examples 2 to 14] As in Example 1, by adjusting the Si/SiC ratio, the amount of the sintering aid, the firing atmosphere, the amount of the pore-forming material, and the like, substrates with a porosity shown in Table 1 were produced. The aluminum source and the lithium source were applied to the substrates while adjusting the coating weights, and then heat treatment was performed at 900°C to 1,300°C. Thereby, samples, each including a film covering at least a portion of the surface of the substrate, were obtained. The parameters were measured for the resulting samples as in Example 1. The results thereof are also shown in Table 1.

[Example 15] A dense substrate composed of silicon carbide particles was prepared. This substrate was produced as follows. 100 Parts by weight of silicon carbide powder with an average particle size of 0.6 $\mu$m, 2.0 parts by weight of $B_4C$ powder with an average particle size of 1.5 $\mu$m, and 1.5 parts by weight of carbon powder with an average particle size of 0.02 $\mu$m were prepared. The preparation was fed into a media-agitation type pulverizer, and mixing and pulverization were performed for 20 hours to obtain a slurry. Then, the slurry was dried using a spray dryer to produce granulated powder with an average particle size of 50 $\mu$m.
The granulated powder was cast in a rubber mold, and hydrostatic pressure forming was performed at a pressure of 2.5 ton/cm$^2$. The formed body was fired in an argon atmosphere of 1 atm at 2,100°C for one hour. Thereby, a dense SiC sintered body was obtained. The porosity was measured in accordance with JIS R 1634. An aluminum source and a lithium source were applied to the substrate, followed by heat treatment at 1,100°C. Thereby, a sample including a film covering at least a portion of the surface of the substrate was obtained. The parameters were measured for the resulting sample as in Example 1. The results thereof are also shown in Table 1.

[Example 16] 45 Parts by weight of coarse silicon carbide powder with an average particle size of 100 $\mu$m and 55 parts by weight of fine silicon carbide powder with an average particle size of 2 $\mu$m were mixed, and 20 parts by weight of water and 2 parts by weight of a binder were added to the mixture to obtain a slurry. The slurry was poured into a gypsum mold and formed. The resulting formed body was fired in argon at 1 atm and 2,200°C for two hours. Thereby, a porous recrystallized silicon carbide sintered body was obtained. The porosity was measured by a mercury porosimeter. An aluminum source and a lithium source were applied to the substrate, followed by heat treatment at 1,100°C. Thereby, a sample including a film covering at least a portion of the surface of the substrate was obtained. The parameters were measured for the resulting sample as in Example 1. The results thereof are also shown in Table 1.

[Comparative Example 1] A porous substrate produced in Example 1 was subjected to heat treatment in the air at 1,100°C for 3.5 hours. Thereby, a sample including a silica film covering at least a portion of the surface of the substrate was obtained. The parameters were measured for the resulting sample as in Example 1. The results thereof are also shown in Table 1. It was confirmed that the maximum thickness of the silica film formed on the surface of the silicon carbide particles was 2 $\mu$m.

[Comparative Example 2] A porous substrate produced in Example 1 was dipped in the alumina sol used in Example 1 such that alumina was applied to the surface of the substrate, and then drying was performed in the air at 110°C. Subsequently, heat treatment was performed in the air at 1,300°C for 3.5 hours. Thereby, a sample including an aluminosilicate-containing film covering at least a portion of the surface of the substrate was obtained. The parameters were measured for the resulting sample as in Example 1. The results thereof are also shown in Table 1.

[Comparative Example 3] A porous substrate produced in Example 1 was dipped in the aqueous solution of lithium hydroxide used in Example 1 such that lithium hydroxide was applied to the surface of the substrate, and then drying was performed in the air at 110°C. Subsequently, heat treatment was performed in the air at 1,100°C for 3.5 hours. Thereby, a sample including a lithium silicate-containing film covering at least a portion of the surface of the substrate was obtained. The parameters were measured for the resulting sample as in Example 1. The results thereof are also shown in Table 1.

[Comparative Example 4] A porous substrate produced in Example 12 was subjected to heat treatment in the air at 1,300°C for 3.5 hours. Thereby, a sample including a silica film covering a very small portion of the surface of the substrate was obtained. The parameters were measured for the resulting sample as in Example 1. The results thereof are also shown in Table 1.

[Comparative Example 5] A porous substrate produced in Example 1 was dipped in the alumina sol used in Example 1 such that alumina was applied to the surface of the substrate, and then drying was performed in the air at 110°C. Subsequently, the substrate was dipped in a 2wt% aqueous solution of potassium chloride such that potassium chloride was applied to the surface of the substrate, and then drying was performed in the air at 110°C. Subsequently, heat treatment was performed in the air at 1,300°C for 3.5 hours. Thereby, a sample including a potassium aluminosilicate-containing film covering at least a portion of the surface of the substrate was obtained. The parameters were measured for the resulting sample as in Example 1. The results thereof are also shown in Table 1.

Among the samples of the examples and comparative examples, using the samples of Examples 1, 7, 10, and 14 and Comparative Examples 1, 2, 3, and 5, an electric furnace spalling test (rapid cooling test) was carried out. As a result, no cracking occurred in all of the samples of the examples, and cracking occurred in all of the samples of the comparative examples. The electric furnace spalling test is a test, in which, specifically, a sample is heated in an electric furnace at 550°C $\times$ 2 h, the temperature is made uniform, then the sample is recovered to room temperature, and thermal shock resistance is evaluated depending on the presence or absence of occurrence of cracks in the sample.

As shown in Table 1, the change in thermal expansion in each of Examples 1 to 16 is negative, while the change in thermal expansion in each of Comparative Examples 1 to 5 is positive. A change in thermal expansion being negative means that the film has a lower thermal expansion coefficient than that of the substrate. In each of Examples 1 to 16, thermal expansion of the substrate can be suppressed by the film having a low thermal expansion coefficient compared with each of Comparative Examples 1 to 5, and as a result, thermal shock resistance is improved. Furthermore, as the absolute negative value of the change in thermal expansion increases, the thermal shock resistance increases. That is, the change in thermal expansion can be an index for evaluating the thermal shock resistance. The reason for the fact that the change in thermal expansion in each of Examples 1 to 16 is negative is believed to be that the film contains, as a main component, a phase having a low thermal expansion coefficient, specifically, a phase including four elements: lithium (Li), aluminum (Al), silicon (Si), and oxygen (O) (in particular, a phase including a lithium aluminosilicate).

Furthermore, when comparison is made between Example 4 and Example 9, Example 9 has a larger negative absolute value of the change in thermal expansion. Consequently, Example 9 has a larger effect of suppressing thermal expansion of the substrate, and the thermal shock resistance is further improved. The reason for this is assumed to be that the lithium aluminosilicate constituting the film of Example 9 is spodumene having a low thermal expansion coefficient, while the lithium aluminosilicate constituting the film of Example 4 is a crystal phase having a thermal expansion coefficient not as low as that of spodumene.

[Table 1]

| | Substrate | | | | Film | | | | | | | | Property |
|---|---|---|---|---|---|---|---|---|---|---|---|---|---|
| | | | | | Composition Ratio | | | | | | Maximum Thickness | Film Weight Ratio | Change in Thermal Expansion |
| | Type | Si: SiC (Weight Ratio) | Sintering Aid (Weight Ratio) | Porosity (%) | $Li_2O$ (wt%) | $Al_2O_3$ (wt%) | $SiO_2$ (wt%) | $K_2O$ (wt%) | Lithium Aluminosilicate | Spodumene Crystal Phase | ($\mu$m) | (wt%) | (%) |
| Example 1 | Si-SiC | 20:80 | - | 40 | 3 | 21 | 76 | - | Contained | Contained | 5 | 9.6 | -2.3 |
| Example 2 | Si-SiC | 20:80 | - | 40 | 2 | 19 | 79 | - | Contained | Contained | 11 | 12.5 | -4.7 |
| Example 3 | Si-SiC | 20:80 | - | 40 | 5 | 41 | 54 | - | Contained | Contained | 12 | 13.7 | -5.3 |
| Example 4 * | Si-SiC | 20:80 | - | 40 | 1 | 3 | 96 | - | Contained | Not Contained | 3 | 6.0 | -1.9 |
| Example 5 | Si-SiC | 20:80 | - | 40 | 37 | 6 | 57 | - | Contained | Contained | 2 | 4.8 | -22 |
| Example 6 | Si-SiC | 20:80 | - | 40 | 4 | 41 | 55 | - | Contained | Contained | 18 | 19.6 | -5.5 |
| Example 7 | Si-SiC | 20:80 | - | 40 | 2 | 11 | 87 | - | Contained | Contained | 102 | 58.3 | -13.6 |
| Example 8 | Si-SiC | 20:80 | - | 40 | 2 | 3 | 95 | - | Contained | Contained | 89 | 48.1 | -11.2 |
| Example 9 | Si-SiC | 30:70 | - | 38 | 3 | 49 | 48 | - | Contained | Contained | 3 | 5.3 | -4.6 |
| Example 10 * | Si-SiC | 30:70 | SrO: 1 | 31 | 1 | 19 | 80 | - | Contained | Not Contained | 2 | 4.1 | -1.1 |
| Example 11 ※1 | Si-SiC | 50:50 | - | 20 | 5 | 37 | 58 | - | Contained | Contained | 6 | 16.8 | -2.3 |
| Example 12 ※1 | Si-SiC | 60:40 | - | 0 | 1 | 5 | 94 | - | Contained | Contained | 18 | 8.6 | -0.1 |
| Example 13 | Si-SiC | 10:90 | - | 48 | 3 | 20 | 77 | - | Contained | Contained | 5 | 7.3 | -4.4 |
| Example 14 ※2 | Si-SiC | 20:80 | SrO: 30 CaO: 9 | 70 | 10 | 12 | 78 | - | Contained | Contained | 3 | 19.7 | -6.8 |
| Example 15* | SiC | 0: 100 | - | 0 | 3 | 35 | 62 | - | Contained | Contained | 48 | 25.8 | -0.5 |
| Example 16 | SiC | 0: 100 | - | 39 | 5 | 21 | 74 | - | Contained | Contained | 3 | 6.2 | -1.8 |
| Comparative Example 1 | Si-SiC | 20:80 | - | 40 | - | - | 100 | - | Not Contained | Not Contained | 2 | 5.8 | 9.1 |
| Comparative Example 2 | Si-SiC | 20:80 | - | 40 | - | 52 | 48 | - | Not Contained | Not Contained | 7 | 11.8 | 6.8 |

EP 2 671 857 B1

(continued)

| | Substrate | | | | Film | | | | | | Property |
| | Type | Si: SiC (Weight Ratio) | Sintering Aid (Weight Ratio) | Porosity (%) | Composition Ratio | | | | Lithium Aluminosilicate | Spodumene Crystal Phase | Maximum Thickness ($\mu$m) | Film Weight Ratio (wt%) | Change in Thermal Expansion (%) |
| | | | | | $Li_2O$ (wt%) | $Al_2O_3$ (wt%) | $SiO_2$ (wt%) | $K_2O$ (wt%) | | | | | |
|---|---|---|---|---|---|---|---|---|---|---|---|---|---|
| Comparative Example 3 | Si-SiC | 20:80 | - | 40 | 4 | - | 96 | - | Not Contained | Not Contained | 3 | 6.9 | 9.0 |
| Comparative Example 4※1 | Si-SiC | 60:40 | - | 0 | - | - | 100 | - | Not Contained | Not Contained | 3 | 0.2 | 0.9 |
| Comparative Example 5 | Si-SiC | 20:80 | - | 40 | - | 23 | 55 | 22 | Not Contained | Not Contained | 3 | 12.8 | 11.4 |

※ 1 In Examples 11, 12 and Comparative Example 4, the formed body was fired in decompression and an Ar atmosphere.
※ 2 In Example 14, 20 parts of fly ash balloon and 15 parts of starch are added as pore-forming materials relative to 100 parts of weight of Si-SiC.
* Examples 4, 10 and 15 are outside of the scope of the invention

Note that Examples 4, 10 and 15 are outside the scope of the invention and are to be considered as reference examples.

As is evident from Table 1, in the samples of Examples 1 to 16, the thermal expansion coefficient is low compared with the samples of Comparative Examples 1 to 4, and thus excellent thermal shock resistance is exhibited.

Industrial Applicability

The silicon carbide material honeycomb structure according to the first aspect of the invention can be used for a DPF or catalytic converter on which, for example, a noble metal catalyst is carried. That is, one utilization form of the honeycomb structure is a catalyst carrier. Furthermore, in catalytic converters of a type in which the catalyst is activated early by electric heating, high thermal shock resistance is required, and therefore use of the silicon carbide material honeycomb structure according to the first aspect of the present invention is particularly preferable.

**Claims**

1. A honeycomb structure formed of a silicon carbide material, the silicon carbide material including:

   a substrate containing, as a main component, silicon carbide or containing, as main components, silicon carbide and metallic silicon, the substrate being porous having a porosity of 20% to 70%, and
   a film covering at least a portion of the surface of the substrate, the surface of the substrate comprising an outer surface of the substrate and an inner surface of the pores of the substrate,
   wherein the film contains, as a main component, a lithium aluminosilicate phase, the lithium aluminosilicate phase being spodumene, and the film has a film weight ratio of between 4.1% and 58.3%, the film weight ratio being defined for a sample of the silicon carbide material as:

   ```
   (weight of sample - weight of substrate)/(weight of

   sample) x 100.
   ```

2. The honeycomb structure according to Claim 1, wherein the film does not contain potassium.

3. The honeycomb structure according to Claim 1 or Claim 2, wherein the substrate has a structure in which silicon carbide particles are bonded by metallic silicon.

4. The honeycomb structure according to any one of Claims 1 to 3, wherein the film has the maximum thickness of 2 to 102 $\mu$m.

5. The honeycomb structure according to any one of Claims 1 to 4, wherein the film has a composition including 1% to 37% by weight of lithium oxide ($Li_2O$), 3% to 49% by weight of aluminum oxide ($Al_2O_3$), and 48% to 96% by weight of silicon oxide ($SiO_2$).

6. An electric heating type catalyst carrier which uses the honeycomb structure according to any one of Claims 1 to 5.

**Patentansprüche**

1. Wabenstruktur, die aus einem Siliciumcarbidmaterial besteht, wobei das Siliciumcarbidmaterial Folgendes umfasst:

   ein Substrat, das als Hauptbestandteil Siliciumcarbid enthält oder als Hauptbestandteile Siliciumcarbid und metallisches Silicium enthält, wobei das Substrat porös mit einer Porosität von 20 % bis 70 % ist, und
   einen Film, der zumindest einen Teil der Oberfläche des Substrats bedeckt, wobei die Oberfläche des Substrats eine Außenfläche des Substrats und eine Innenfläche der Poren des Substrats umfasst,
   wobei der Film als Hauptbestandteil eine Lithiumaluminosilicatphase umfasst, wobei die Lithiumaluminosilicatphase Spodumen ist, und der Film ein Filmgewichtsverhältnis zwischen 4,1 % und 58,3 % aufweist, wobei das Filmgewichtsverhältnis für eine Probe des Siliciumcarbidmaterials definiert ist als:

(Probengewicht – Substratgewicht) / (Probengewicht) x 100.

**2.** Wabenstruktur nach Anspruch 1, wobei der Film kein Kalium enthält.

**3.** Wabenstruktur nach Anspruch 1 oder Anspruch 2, wobei das Substrat eine Struktur aufweist, in der Siliciumcarbidteilchen durch metallisches Silicium gebunden sind.

**4.** Wabenstruktur nach einem der Ansprüche 1 bis 3, wobei der Film eine maximale Dicke von 2 bis 102 $\mu$m aufweist.

**5.** Wabenstruktur nach einem der Ansprüche 1 bis 4, wobei der Film eine Zusammensetzung aufweist, die 1 bis 37 Gew.-% Lithiumoxid ($Li_2O$), 3 bis 49 Gew.-% Aluminiumoxid ($Al_2O_3$) und 48 bis 96 Gew.-% Siliciumoxid ($SiO_2$) umfasst.

**6.** Katalysatorträger vom Elektroheizungstyp, in dem eine Wabenstruktur nach einem der Ansprüche 1 bis 5 verwendet wird.

**Revendications**

**1.** Structure en nid d'abeilles formée d'un matériau en carbure de silicium, le matériau en carbure de silicium comprenant :

un substrat contenant, en tant que composant principal, du carbure de silicium ou contenant, en tant que composants principaux, du carbure de silicium et du silicium métallique, le substrat étant poreux ayant une porosité de 20 % à 70 %, et
un film recouvrant au moins une partie de la surface du substrat, la surface du substrat comprenant une surface extérieure du substrat et une surface intérieure des pores du substrat,
dans lequel le film contient, en tant que composant principal, une phase d'aluminosilicate de lithium, la phase d'aluminosilicate de lithium étant du spodumène, et le film a un rapport en poids de film compris entre 4,1 % et 58,3 %, le rapport en poids de film étant défini pour un échantillon du matériau en carbure de silicium comme :

(poids d'échantillon - poids de substrat)/(poids d'échantillon) x 100.

**2.** Structure en nid d'abeilles selon la revendication 1, dans laquelle le film ne contient pas de potassium.

**3.** Structure en nid d'abeilles selon la revendication 1 ou la revendication 2, dans laquelle le substrat a une structure dans laquelle des particules de carbure de silicium sont liées par du silicium métallique.

**4.** Structure en nid d'abeilles selon l'une quelconque des revendications 1 à 3, dans laquelle le film a une épaisseur maximale de 2 à 102 $\mu$m.

**5.** Structure en nid d'abeilles selon l'une quelconque des revendications 1 à 4, dans laquelle le film a une composition comprenant 1 % à 37 % en poids d'oxyde de lithium ($Li_2O$), 3 % à 49 % en poids d'oxyde d'aluminium ($Al_2O_3$), et 48 % à 96 % en poids d'oxyde de silicium ($SiO_2$).

**6.** Support catalytique de type à chauffage électrique qui utilise la structure en nid d'abeilles selon l'une quelconque des revendications 1 à 5.

Fig.1

Fig.2

**EP 2 671 857 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002154882 A
- WO 2005014171 A
- JP 2186586 A
- JP 2004275854 A
- US 4595662 A